# FASCICULE DE BREVET EUROPEEN

(11) **EP 1 906 032 B1**
(45) Date de publication et mention de la délivrance du brevet: **30.12.2009**
(21) Numéro de dépôt: 07291151.4
(22) Date de dépôt: 26.09.2007
(51) Int. Cl.: F16B 21/07

(54) **Dispositif de fixation élastique comprenant une bague déformable**
Einen deformierbaren Ring umfassende elastische Befestigungsvorrichtung
Elastic fastening device comprising a deformable ring

(30) Priorité: 27.09.2006 FR 0608496
(43) Date de publication de la demande: 02.04.2008
(73) Titulaire: Centre d'Etude et de Recherche pour l'Automobile (CERA), 51100 Reims (FR)
(72) Inventeur: Vitrant, Olivier, 51500 Reims (FR)
(74) Mandataire: Sayettat, Julien Christian

(56) Documents cités:
- EP-A- 0 479 705
- WO-A-2005/010380
- FR-A- 2 836 526
- US-A- 3 301 296

## Description

L'invention concerne un dispositif de fixation d'un composant sur un élément de véhicule automobile et un ensemble comprenant un tel composant auquel est associé une pluralité de tels dispositifs.

Il est connu, notamment du document FR-2 796 998 de réaliser un dispositif de fixation d'un composant, par exemple un panneau de protection acoustique, sur un élément, notamment un moteur de véhicule automobile, ledit élément étant solidaire d'une tige de réception dudit dispositif, ledit dispositif comprenant un plot élastique, ledit plot comprenant un logement agencé pour pouvoir s'emboîter sur la tête de ladite tige et un moyen d'association audit composant.

Le document WO 2005 010 380 montre les caractéristiques du préambule de la revendication 1.

Le plot, généralement à base de caoutchouc, permet d'assurer, de par son caractère élastique, un rattrapage des dispersons de montage et/ou un découplage des vibrations lorsque l'élément est vibrant, par exemple lorsqu'il est un moteur, de manière que le composant ne soit pas lui même source de bruit.

Dans les réalisations connues, l'association directe du plot au composant présente plusieurs inconvénients.

Notamment, le plot a tendance à se déchirer au niveau de son association avec le composant.

Par ailleurs, il est souvent observé un désassemblage entre le plot et le composant lors du montage de l'ensemble sur l'élément, ceci notamment lorsque la tige ne se présente pas exactement en face du logement, particulièrement du fait des dispersions dimensionnelles des différentes pièces et du fait que le composant est souvent monté en aveugle sur l'élément.

L'invention a pour but de pallier ces inconvénients.

A cet effet, et selon un premier aspect, l'invention propose un dispositif selon les caractéristiques de la revendication 1.

Dans les revendications, par « bague », on entend notamment un élément de forme généralement ronde, mais ceci n'exclut pas l'utilisation d'autres formes, par exemple ovales, carrées, etc..., ceci en fonction des contraintes de montage.

Un tel dispositif permet à la fois d'assurer une bonne tenue du plot sur le composant et une protection du plot vis à vis des risques de déchirure.

Dans cette description, les termes de positionnement dans l'espace (horizontal,...) sont pris en référence au dispositif tel que représenté sur les figures, et notamment tel que généralement disposé dans le véhicule.

Selon un deuxième aspect, l'invention propose un ensemble de véhicule automobile, ledit ensemble comprenant un composant auquel est associé au moins un tel dispositif.

D'autres particularités et avantages de l'invention apparaîtront dans la description qui suit, faite en référence aux figures jointes dans lesquelles :

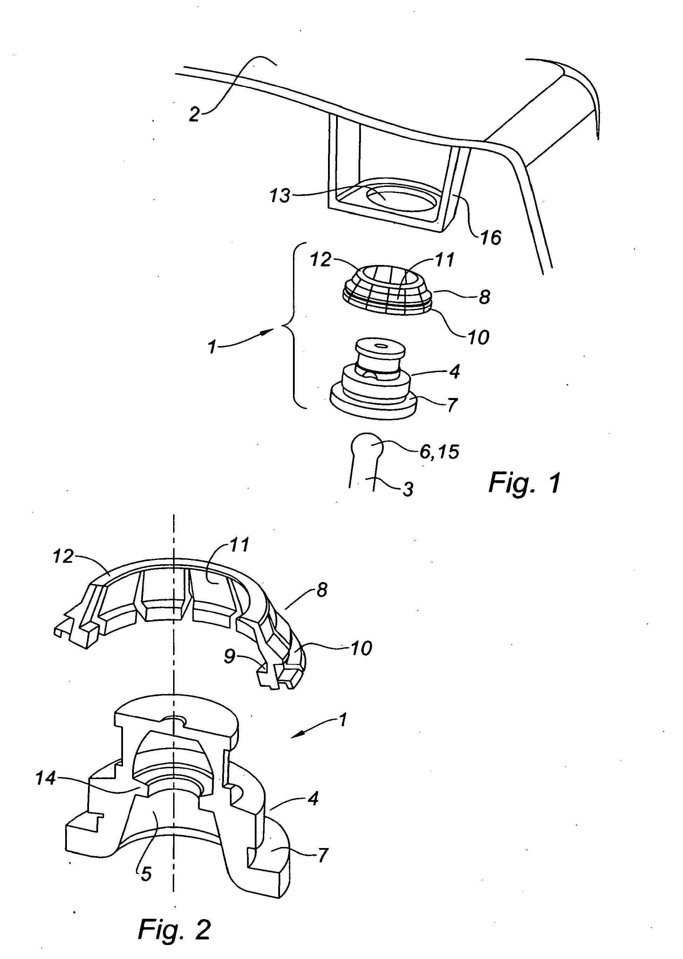

- la figure 1 est une vue en perspective éclatée d'un dispositif selon une réalisation de l'invention, ledit dispositif étant disposé à proximité d'un composant, représenté partiellement, et d'une tige,
- la figure 2 est une vue agrandie, en coupe et en perspective, du dispositif de la figure 1,

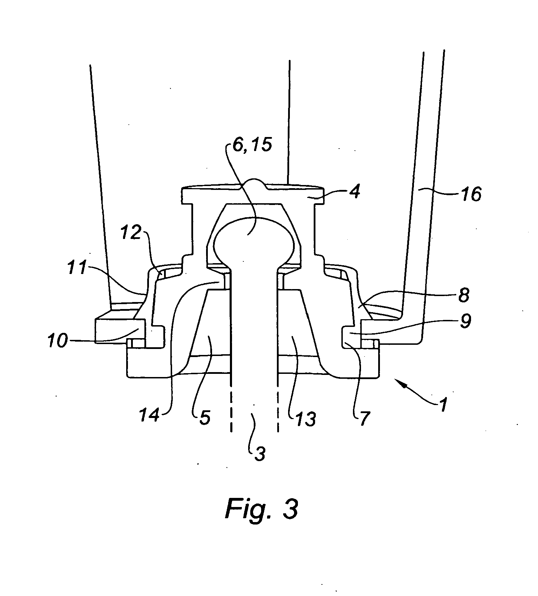

- la figure 3 est une vue en coupe du dispositif de la figure 1, ledit dispositif étant associé au composant et à la tige.

En référence aux figures, on décrit à présent un dispositif 1 de fixation d'un composant 2 sur un élément de véhicule automobile, tel qu'un moteur, ledit élément étant solidaire d'une tige 3 de réception dudit dispositif, ledit dispositif comprenant :
- un plot 4 élastique comprenant un logement 5, agencé pour pouvoir s'emboîter sur la tête 6 de ladite tige, et un moyen d'ancrage 7,
- une bague 8 déformable disposée autour dudit plot, ladite bague comprenant sur sa face interne un moyen d'ancrage réciproque 9, coopérant avec ledit moyen d'ancrage, et sur sa face externe un moyen d'association 10 audit composant.

Un composant selon l'invention peut être par exemple : un écran acoustique sur moteur, un écran thermique de compartiment à moteur, un écran thermique sous caisse, un écran aéraulique sous caisse, un déflecteur sous caisse, un boîtier de commande de frein électrique, etc...

Selon l'invention, la bague 8 présente une géométrie générale en manchon, ici en tronc de cône, les parois dudit manchon étant sous forme de languettes 11 issues d'un anneau 12 de matière disposé selon une base dudit manchon, les moyen d'ancrage réciproque 9 et d'association 10 étant disposés de part et d'autre desdites languettes, lesdites languettes pouvant effectuer un débattement radial élastique facilitant l'ancrage de ladite bague sur le plot 4.

Selon la géométrie du manchon, l'anneau 12 peut présenter d'autres formes qu'une forme circulaire, par exemple une forme carrée, etc...

La bague 8 est notamment réalisée par moulage par injection de thermoplastique.

Le moyen d'ancrage 7 est sous forme d'une rainure horizontale réalisée en périphérie externe du plot 4, le moyen d'ancrage réciproque 9 étant formé d'une saillie horizontale interne disposée à proximité de l'extrémité libre d'au moins une partie des languettes 11, chacune desdites saillies s'engageant dans ladite rainure.

Le moyen d'association 10 est sous forme d'une rainure horizontale externe disposée à proximité de l'extrémité libre d'au moins une partie des languettes 11, ladite rainure étant destinée à coopérer avec la périphérie d'un orifice 13 prévu dans le composant 2.

Le logement 5 comprend un resserrement 14 interne destiné à coopérer avec un renflement 15 prévu sur la tête 6 de la tige 3.

Selon une réalisation, la disposition des languettes 11 dans la bague 8 à l'état libre est agencée de sorte que ladite bague puisse être montée sur le plot 4 sans débattement radial desdites languettes, la coopération entre le moyen d'ancrage 7 et le moyen d'ancrage réciproque 9 étant réalisée par activation du moyen d'association 10.

Un ensemble, notamment de protection thermique ou acoustique, de véhicule automobile, comprend un composant 2 auquel est associé au moins un dispositif 1.

Selon la réalisation représentée, chaque moyen d'association 10 est sous forme de rainure coopérant avec un orifice 13 respectivement réalisé dans l'épaisseur du composant 2.

Notamment, l'orifice 13 est réalisé dans la paroi inférieure d'une cage 16 moulée d'une pièce en envers du composant 2, ceci de sorte à masquer le dispositif 1.

## Revendications

1. Dispositif (1) de fixation d'un composant (2) sur un élément de véhicule automobile, ledit élément étant solidaire d'une tige (3) de réception dudit dispositif, ledit dispositif comprenant :
• un plot (4) élastique comprenant un logement (5), agencé pour pouvoir s'emboîter sur la tête (6) de ladite tige, et un moyen d'ancrage (7),
• une bague (8) déformable disposée autour dudit plot, ladite bague comprenant sur sa face interne un moyen d'ancrage réciproque (9), coopérant avec ledit moyen d'ancrage, et sur sa face externe un moyen d'association (10) audit composant.
ledit dispositif étant **caractérisé en ce que** la bague (8) présente une géométrie générale en manchon, les parois dudit manchon étant sous forme de languettes (11) issues d'un anneau (12) de matière disposé selon une base dudit manchon, les moyen d'ancrage réciproque (9) et d'association (10) étant disposés de part et d'autre desdites languettes, lesdites languettes pouvant effectuer un débattement radial élastique facilitant l'ancrage de ladite bague sur le plot (4).

2. Dispositif selon la revendication 1, le moyen d'ancrage (7) étant sous forme d'une rainure horizontale réalisée en périphérie externe du plot (4), le moyen d'ancrage réciproque (9) étant formé d'une saillie horizontale interne disposée à proximité de l'extrémité libre d'au moins une partie des languettes (11), chacune desdites saillies s'engageant dans ladite rainure.

3. Dispositif selon l'une quelconque des revendications 1 ou 2, le moyen d'association (10) étant sous forme d'une rainure horizontale externe disposée à proximité de l'extrémité libre d'au moins une partie des languettes (11), ladite rainure étant destinée à coopérer avec la périphérie d'un orifice (13) prévu dans le composant (2).

4. Dispositif selon l'une quelconque des revendications 1 à 3, la disposition des languettes (11) dans la bague (8) à l'état libre étant agencée de sorte que ladite bague puisse être montée sur le plot (4) sans débattement radial desdites languettes, la coopération entre le moyen d'ancrage (7) et le moyen d'ancrage réciproque (9) étant réalisée par activation du moyen d'association (10).

5. Dispositif selon l'une quelconque des revendications 1 à 4, le logement (5) comprenant un resserrement (14) interne destiné à coopérer avec un renflement (15) prévu sur la tête (6) de la tige (3).

6. Ensemble de véhicule automobile, ledit ensemble comprenant un composant (2) auquel est associé au moins un dispositif selon l'une quelconque des revendications 1 à 5.

7. Ensemble selon la revendication 6, quand elle dépend de la revendication 3, chaque moyen d'association (10) étant sous forme de rainure coopérant avec un orifice (13) respectivement réalisé dans l'épaisseur du composant (2).

8. Ensemble selon la revendication 7, au moins un orifice (13) étant réalisé dans la paroi inférieure d'une cage (16) moulée d'une pièce en envers du composant (2).

## Claims

1. Device (1) for fastening a component (2) on an element of a motor vehicle, said element being attached to a rod (3) for receiving said device, said device comprising:
- an elastic pin (4) comprising a housing (5), arranged in order to nest on the head (6) of said rod, and a means of anchoring (7),
- a deformable ring (8) arranged around said pin, said ring comprising on its internal face a reciprocal means of anchoring (9), cooperating with said means of anchoring, and on its external face a means of association (10) to said component,
said device being **characterised in that** the ring (8) has a general geometry as a sleeve, the walls of said sleeve having the form of tabs (11) coming from a ring (12) of material arranged according to a base of said sleeve, the reciprocal means of anchoring (9) and of association (10) being arranged on both sides of said tabs, said tabs being able to carry out an elastic radial movement facilitating the anchoring of said ring on the pin (4).

2. Device according to claim 1, the means of anchoring (7) having the form of a horizontal groove made in the external periphery of the pin (4), the reciprocal means of anchoring (9) being formed of an internal horizontal protuberance arranged in the vicinity of the free end of at least one portion of the tabs (11), each one of said protuberances engaging in said groove.

3. Device according to any of claims 1 or 2, the means of association (10) having the form of an external horizontal groove arranged in the vicinity of the free end of at least one portion of the tabs (11), said groove being intended to cooperate with the periphery of an orifice (13) provided in the component (2).

4. Device according to any of claims 1 to 3, the arrangement of the tabs (11) in the ring (8) in free state being arranged in such a way that said ring can be mounted on the pin (4) without radial movement of said tabs, the cooperation between the means of anchoring (7) and the reciprocal means of anchoring (9) being carried out by the activation of the means of association (10).

5. Device according to any of claims 1 to 4, the housing (5) including an internal contraction (14) intended to cooperate with an extension (15) provided on the head (6) of the rod (3).

6. Motor vehicle unit, said unit comprising a component (2) to which is associated at least one device according to any of claims 1 to 5.

7. Unit according to claim 6, when it is dependent on claim 3, each means of association (10) having the form of a groove cooperating with an orifice (13) respectively arranged in the thickness of the component (2).

8. Unit according to claim 7, at least one orifice (13) being arranged in the lower wall of a cage (16) moulded from a part on the reverse of the component (2).

## Patentansprüche

1. Vorrichtung (1) zum Befestigen eines Bauteils (2) an einem Kraftfahrzeugelement, wobei das Element mit einem Stab (3) zum Aufnehmen der Vorrichtung fest verbunden ist, wobei die Vorrichtung folgendes umfasst:
- ein elastisches Kontaktstück (4), das eine Aufnahme (5), die angeordnet ist, um auf den Kopf (6) des Stabs gesteckt werden zu können, und ein Verankerungsmittel (7) umfasst,
- eine verformbare Hülse (8), die um das Kontaktstück herum angeordnet ist, wobei die Hülse auf ihrer Innenfläche ein gegenseitiges Verankerungsmittel (9), das mit dem Verankerungsmittel zusammenwirkt, und auf ihrer Außenseite ein Mittel (10) zum Verbinden mit dem Bauteil umfasst,
wobei die Vorrichtung **dadurch gekennzeichnet ist, dass** die Hülse (8) eine allgemeine muffenartige Geometrie aufweist, wobei die Wände der Muffe in Form von Laschen (11) vorliegen, die aus einem Materialring (12) stammen, der entlang einer Basis der Muffe angeordnet ist, wobei die gegenseitigen Verankerungsmittel (9) und die Verbindungsmittel (10) auf beiden Seiten der Laschen angeordnet sind, wobei die Laschen eine elastische radiale Ausfederung ausführen können, welche die Verankerung der Hülse auf dem Kontaktstück (4) erleichtert.

2. Vorrichtung nach Anspruch 1, wobei das Verankerungsmittel (7) in Form einer waagerechten Nut vorliegt, die am äußeren Umfang des Kontaktstückes (4) ausgebildet ist, wobei das gegenseitige Verankerungsmittel (9) aus einem inneren waagerechten Vorsprung gebildet ist, der in der Nähe des freien Endes mindestens eines Teils der Laschen (11) angeordnet ist, wobei jeder der Vorsprünge in die Nut eingreift.

3. Vorrichtung nach einem der Ansprüche 1 oder 2, wobei das Verbindungsmittel (10) in Form einer äußeren waagerechten Nut vorliegt, die in der Nähe des freien Endes mindestens eines Teils der Laschen (11) angeordnet ist, wobei die Nut dazu gedacht ist, mit dem Umfang einer Öffnung (13) zusammenzuarbeiten, die in dem Bauteil (2) vorgesehen ist.

4. Vorrichtung nach einem der Ansprüche 1 bis 3, wobei die Anordnung der Laschen (11) in der Hülse (8) im freien Zustand derart gestaltet ist, dass die Hülse an dem Kontaktstück (4) ohne radiale Ausfederung der Laschen angebracht werden kann, wobei das Zusammenwirken zwischen dem Verankerungsmittel (7) und dem gegenseitigen Verankerungsmittel (9) durch die Aktivierung des Verbindungsmittels (10) ausgeführt wird.

5. Vorrichtung nach einem der Ansprüche 1 bis 4, wobei die Aufnahme (5) eine innere Verengung (14) umfasst, die dazu gedacht ist, mit einer Verdickung (15) zusammenzuwirken, die an dem Kopf (6) des Stabs (3) vorgesehen ist.

6. Kraftfahrzeugeinrichtung, wobei die Einrichtung ein Bauteil (2) umfasst, das mit mindestens einer Vorrichtung nach einem der Ansprüche 1 bis 5 verbunden ist.

7. Einrichtung nach Anspruch 6, insofern sie von Anspruch 3 abhängig ist, wobei jedes Verbindungsmittel (10) in Form einer Nut vorliegt, die mit einer Öffnung (13) zusammenwirkt, die jeweils in der Dicke des Bauteils (2) ausgebildet ist.

8. Einrichtung nach Anspruch 7, wobei mindestens eine Öffnung (13) in der unteren Wand eines Käfigs (16) ausgebildet ist, der einstückig in der Rückseite des Bauteils (2) geformt ist.
